# EUROPÄISCHE PATENTSCHRIFT

(11) **EP 4 100 710 B1**
(45) Veröffentlichungstag und Bekanntmachung des Hinweises auf die Patenterteilung: **01.10.2025**
(21) Anmeldenummer: 21700850.7
(22) Anmeldetag: 12.01.2021
(51) Int. Cl.: G01M 3/20, G01N 1/24

(54) **SCHNÜFFELSONDE MIT ABSCHIRMUNG**
SNIFFER PROBE WITH SHIELDING
SONDE DE RENIFLEUR DOTÉE D'UN BLINDAGE

(30) Priorität: 03.02.2020 DE 102020102630
(43) Veröffentlichungstag der Anmeldung: 14.12.2022
(73) Patentinhaber: Inficon GmbH, 50968 Köln (DE)
(72) Erfinder: PUCHALLA-KÖNIG, Jochen, 50968 Köln (DE); ROLFF, Erik, 50968 Köln (DE); DECKER, Silvio, 50968 Köln (DE)
(74) Vertreter: dompatent von Kreisler Selting Werner - Partnerschaft von Patent- und Rechtsanwälten mbB
(86) Internationale Anmeldenummer: PCT/EP2021/050430
(87) Internationale Veröffentlichungsnummer: WO 2021/156021

(56) Entgegenhaltungen:
- EP-A2- 0 138 370
- WO-A1-2015/028336
- WO-A1-2018/050879
- CN-U- 203 811 332
- US-A- 3 528 279
- US-B1- 9 097 624

## Beschreibung

Die Erfindung betrifft eine Schnüffelsonde eines Gasleckdetektors zur Gaslecksuche.

Schnüffelsonden werden in der Gaslecksuche dazu eingesetzt, im Bereich eines vermuteten Gaslecks über die Oberfläche eines Testobjekts geführt zu werden. Die Schnüffelsonde weist hierzu eine mit einer Gasansaugöffnung versehene Schnüffelspitze auf, durch die das zu analysierende Gas- Luftgemisch angesaugt wird. Das der Gasansaugöffnung gegenüberliegende, rückwärtige Ende der Schnüffelsonde ist typischerweise über eine Hauptschnüffelleitung mit dem Gasleckdetektor verbunden, in dem die Analyse des angesaugten Gases erfolgt.

Bei der automatisierten Schnüffellecksuche an Rohren besteht eine Schwierigkeit darin, Gaslecks auf der Rückseite der untersuchten Rohre zu detektieren. Bei herkömmlichen Schnüffelsonden muss der Gasfluss erhöht werden, um Leckage-Gas mit Luft von der Rückseite der betroffenen Rohre anzusaugen. Dadurch wird die Empfindlichkeit der Gasleckdetektion vermindert. Oder die Sonde muss um das Rohr herumgeführt werden, was Zeit benötigt. Insbesondere an Rohrleitungen von Kühlschränken ist es schwierig, den Gasfluss so zu erhöhen, dass Lecks der Größenordnung von 0,5 g/a an der Rückseite der untersuchten Rohre gefunden werden.

WO 2018/050879 A1 beschreibt einen Füllsondenaufsatz mit langgestreckten gasleitenden Elementen an der Schnüffelspitze.

EP 0 138 370 A2 beschreibt einen Leckdetektor mit einem ringförmig angeordneten flexiblen, gasdurchlässigen Rock.

CN 203811332 U beschreibt eine abdeckende Maske für einen Leckdetektor.

WO 2015/028336 A1 beschreibt einen selbstreinigenden Partikelfilter in einer Schnüffelsonde.

Der Erfindung liegt die Aufgabe zugrunde, eine Schnüffelsonde zu schaffen, mit der insbesondere das Detektieren von Lecks auf der Rückseite untersuchter Rohre vereinfacht wird.

Die erfindungsgemäße Schnüffelsonde ist definiert durch die Merkmale von Patentanspruch 1.

Demnach besteht die Erfindung in einer Schnüffelsonde mit mindestens einer Schnüffelspitze, die eine Ansaugöffnung aufweist. Die Ansaugöffnung ist über eine vorzugsweise in der Schnüffelsonde beispielsweise in der Schnüffelspitze verlaufende Verbindungsleitung mit einer Hauptschnüffelleitung verbunden, die mit dem Gasleckdetektor verbindbar oder verbunden ist.

Erfindungsgemäß weist die Schnüffelspitze im Bereich der Ansaugöffnung flexible langgestreckte Abschirmelemente auf, die von der Schnüffelspitze derart abstehen, dass die Ansaugöffnung von der äußeren Umgebung der Schnüffelsonde zu allen Seiten hin abgeschirmt wird. Mit einer Abschirmung zu allen Seiten ist gemeint, dass zwischen benachbarten Abschirmelementen ein Abstand von maximal circa wenigen Millimetern, vorzugsweise weniger als einem Millimeter verbleibt, durch welchen Abstand Gas aus der äußeren Umgebung zu der Ansaugöffnung strömt und durch diese angesaugt wird.

So kann von den Abschirmelementen ein an die Ansaugöffnung angrenzender Testhohlraum für das zu untersuchende Testobjekt gebildet werden, der von der Schnüffelspitze und von den davon abstehenden Abschirmelementen vollständig bis auf einen geringen Abstand, der vorzugsweise maximal etwa ein Zehntel des Durchmessers der Ansaugöffnung betragen sollte, umschlossen wird, sodass der Testhohlraum durch die Abschirmelemente von der äußeren Umgebung der Schnüffelsonde abgeschirmt wird. Die Schnüffelsonde und die davon abstehenden Abschirmelemente bilden damit gewissermaßen die Wände des Testhohlraums, wobei die Wände im Bereich der Abschirmelemente gasdurchlässig sind und Gasverwirbelungen beispielsweise bei Windstößen reduzieren.

Der Abstand zwischen benachbarten Abschirmelementen sollte dabei nicht größer sein als etwa ein Zehntel und vorzugsweise etwa ein Hundertstel des Durchmessers der Ansaugöffnung. Im Fall eines Durchmessers der Ansaugöffnung von 4 mm sollten also die Abstände zwischen benachbarten Abschirmelementen geringer sein als 0,4 mm und vorzugsweise geringer als 40 µm. Mit dem Durchmesser der Ansaugöffnung ist der maximale Abstand zwischen einander gegenüberliegenden Rändern der Ansaugöffnung gemeint, sodass der Begriff "Durchmesser" nicht zwingend eine kreisrunde Ansaugöffnung erfordert.

Die Schnüffelspitze weist mindestens zwei separate Arme auf, zwischen denen der Testhohlraum gebildet ist, wobei mindestens einer der Arme auf der dem Testhohlraum zugewandten Seite die Ansaugöffnung aufweist.

Mindestens einer der Arme ist auf seiner dem Testhohlraum zugewandten Seite mit mindestens einem, vorzugsweise mehreren flexiblen Abschirmelementen versehen, die von dem Arm bevorzugt rechtwinklig abstehen und den Testhohlraum begrenzen und dadurch die Ansaugöffnung von der äußeren Umgebung der Schnüffelsonde abschirmen. Bei den Abschirmelementen kann es sich um elastische Faserelemente und/oder Borsten nach Art einer Bürste handeln. Die Abschirmelemente schirmen die Schnüffelspitze und die Ansaugöffnung derart von der äußeren Umgebung der Schnüffelsonde ab, dass beim Ansaugen des Gases die Luftbewegung primär von außerhalb der Schnüffelsonde nach innen in das Innere des Hohlraums hinein erfolgt, so dass durch die Hauptschnüffelleitung primär das Innere des Testhohlraums abgesaugt wird. Auswirkungen von Luftverwirbelungen im Bereich außerhalb der Schnüffelsonde auf das Ansaugen von durch ein Leck ausgetretenem Gas werden dadurch reduziert.

Die Abschirmelemente können als flexible Fasern ausgebildet sein, wobei mehrere Fasern derart eng nebeneinander angeordnet sind, dass durch die Fasern eine Begrenzung nach Art einer Wand geschaffen wird, die den Testhohlraum 20 von der äußeren Umgebung der Schnüffelsonde abschirmt. Alternativ können die Abschirmelemente auch in Form von flexiblen Wänden ausgebildet sein.

Die Abschirmelemente sind vorteilhafterweise in einem Randbereich der dem Testhohlraum zugewandten Innenseite des betroffenen Armes und weiter bevorzugt in sämtlichen Randbereichen jedes Armes derart angeordnet, dass die Abschirmelemente den Testhohlraum vollständig begrenzen, um das Innere des Testhohlraumes und die Ansaugöffnung von der äußeren Umgebung der Schnüffelsonde abzuschirmen.

Wenn die Schnüffelsonde über ein zu testendes Objekt, wie z. B. ein Rohr, geschoben wird, gibt das Faserelement bzw. geben die Faserelemente gegenüber dem Testobjekt nach und umschließen den in dem Testhohlraum angeordneten Abschnitt des Testobjekts und schirmen diesen von der äußeren Umgebung ab. Dadurch wird eine Art mobile Testkammer für das Testobjekt geschaffen, wobei die Testkammer über das Testobjekt hinweg geschoben werden kann. Beim Absaugen des Testhohlraums durch die Ansaugöffnung der Schnüffelsonde strömt Gas wie z. B. Luft von außen aus der äußeren Umgebung der Schnüffelsonde an den Abschirmelementen vorbei in den Testhohlraum, wobei verhindert wird, dass Luftverwirbelungen in der äußeren Umgebung der Schnüffelsonde Gas verwirbeln, welches innerhalb des Testhohlraums in dem von den Abschirmelementen abgeschirmten Bereich aus dem Testobjekt durch ein Leck austritt.

Vorteilhafterweise ist jeder der beiden Arme mit den Abschirmelementen versehen, so dass sich die Abschirmelemente von einander gegenüberliegenden Seiten in den Raum zwischen den beiden Armen erstrecken. Dabei ist es von Vorteil, wenn zumindest einige der Abschirmelemente sich ungefähr bis zur Mitte des Abstands zwischen den Armen erstrecken, damit der Testhohlraum mit den Abschirmelementen zumindest zu einem überwiegenden Teil von der Umgebung abgeschirmt wird.

Dabei hat jedes Abschirmelement ein erstes, an dem jeweiligen Arm angeordnetes Ende und ein dem ersten Ende gegenüberliegendes zweites Ende. Der Abstand zwischen den zweiten Enden zwischen einander gegenüberliegenden Abschirmelementen, die sich von verschiedenen Armen auf einander zu erstrecken, sollte gering sein und möglichst geringer sein als 1/10 und bevorzugt geringer als 1/100 des Durchmessers der Ansaugöffnung.

Um zu vermeiden, dass ein in dem Testhohlraum positioniertes Testobjekt, wie zum Beispiel ein abzuschnüffelndes Rohr, die Abschirmelemente verbiegt und einen Freiraum ohne Abschirmelemente schafft, können Abschirmelemente mindestens zwei verschiedener Längen vorgesehen sein, damit zumindest kürzere Abschirmelemente den derart gebildeten Hohlraum von der äußeren Umgebung abschirmen. Insgesamt sollen so viele Rand-Bereiche des Testhohlraums wie möglich von Abschirmelementen durchdrungen werden, auch wenn ein Testobjekt in dem Testhohlraum positioniert ist und die dortigen Abschirmelemente verbiegt.

Hierzu können die Abschirmelemente verschiedener Längen in Reihen angeordnet sein, wobei jede Reihe Abschirmelemente gleicher Länge enthalten kann und Reihen mit Abschirmelementen verschiedener Längen einander abwechseln.

Vorzugsweise sollte die Ansaugöffnung zumindest zu einem überwiegenden Teil und bevorzugt vollständig von Abschirmelementen umgeben bzw. abgeschirmt sein.

Die Schnüffelsonde kann nach Art einer Gabel ausgebildet sein und im Bereich eines vorderen Endes des jeweiligen Armes ausgebildet sein, während die den vorderen Enden gegenüberliegenden rückwärtigen Enden der Arme miteinander verbunden sind.

Die rückwärtigen Enden der Arme münden vorzugsweise in ein gemeinsames Stammelement, das beispielsweise als Handgriff ausgebildet sein kann und die Hauptschnüffelleitung beinhaltet. Die Arme können Y- oder U-förmig ausgebildet sein, wobei eine U-förmige Ausgestaltung von Vorteil ist. Bei einer U-förmigen Ausgestaltung der Arme sind die Ansaugöffnungen an den dem Testhohlraum zugewandten Innenseiten der jeweiligen Arme und in deren vorderen Endbereichen ausgebildet. Die U-förmige Gabel kann dann einfach derart über eine Rohrleitung geschoben werden, dass die abzuschnüffelnde Rohrleitung in dem Testhohlraum enthalten ist, so dass mit der Ansaugöffnung eine der Seiten des Testobjekts, z.B. der zu testenden Rohrleitung, abgeschnüffelt werden kann.

Die dem Testhohlraum zugewandten Innenseiten der Arme sind im Bereich der vorderen Enden vorzugsweise parallel zueinander angeordnet, sodass auch die Abschirmelemente parallel zueinander verlaufen.

Im Folgenden wird anhand der Figuren ein Ausführungsbeispiel der Erfindung näher erläutert.

Es zeigen:

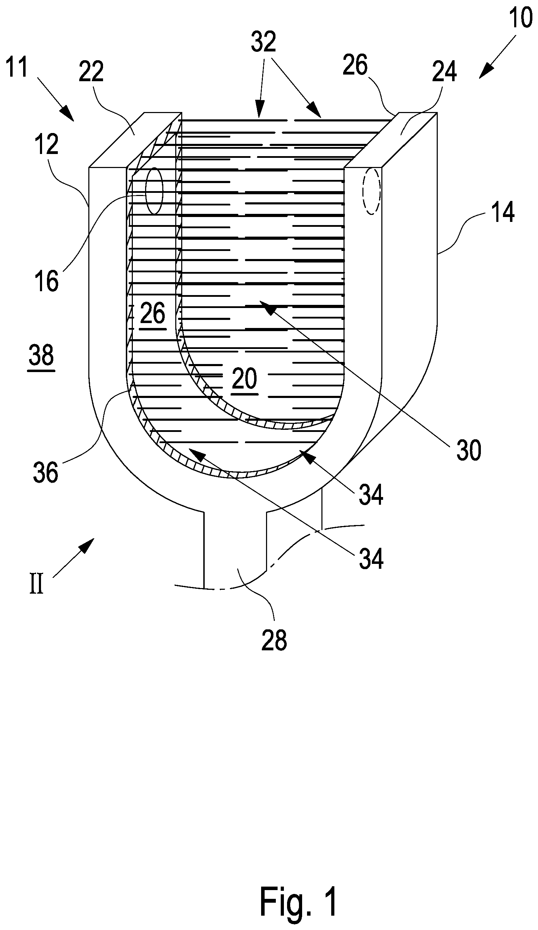

- Figur 1: eine perspektivische Darstellung des Ausführungsbeispiels und

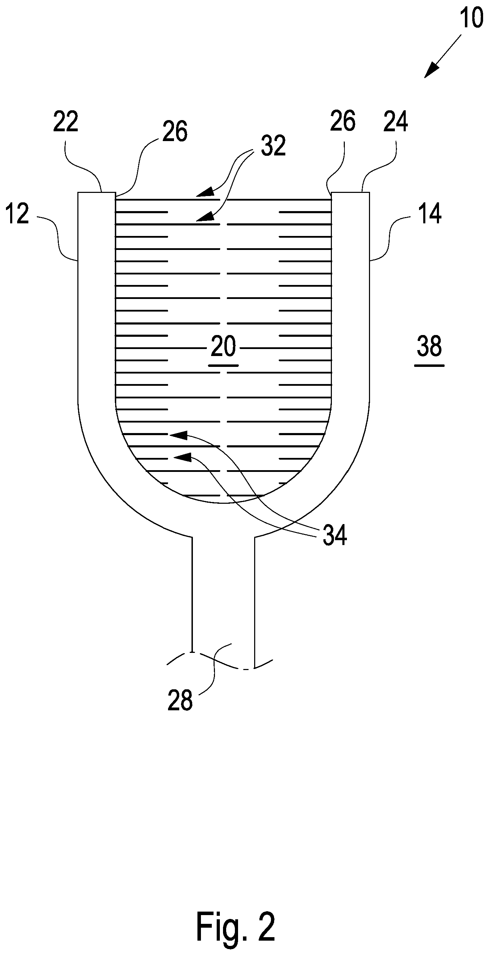

- Figur 2: eine Ansicht aus Richtung des Pfeils II in Fig. 1.

Die Schnüffelsonde weist zwei Arme 12, 14 auf, die ein U bilden. Die rückwärtigen Enden der beiden Arme 12, 14 sind einstückig mit einem zentralen Stammelement 28 verbunden, in dem eine in der Figur nicht dargestellte Hauptschnüffelleitung enthalten ist, die mit dem Gasleckdetektor verbunden wird. Die den rückwärtigen Enden gegenüberliegenden vorderen Enden 22, 24 der beiden Arme 12, 14 sind beabstandet zueinander derart ausgebildet, dass zwischen ihnen ein Testhohlraum 20 für die zu untersuchende Rohrleitung gebildet ist.

Auf einander gegenüberliegenden Seiten des Testhohlraums 20 sind an den Testhohlraum 20 angrenzenden Innenseiten 26 der beiden Arme 22, 24 Ansaugöffnungen 16, 18 ausgebildet. Alternativ ist denkbar, dass auch nur einer der beiden Arme 22, 24 mit einer Ansaugöffnung 16 versehen ist, während der andere Arm 24 keine Ansaugöffnung 18 aufweist oder sich die einzige Ansaugöffnung 16 mittig am oder im Bereich des Stammelements 28 zwischen den beiden Armen befindet. Alternativ kann die Ansaugöffnung mit einem Kapillar in den abgeschirmten Bereich hineingeführt werden.

Jede Ansaugöffnung 16, 18 ist im vorderen Bereich des vorderen Endes 22, 24 des betreffenden Armes 12, 14 ausgebildet. Jede Ansaugöffnung 16, 18 ist über eine separate, in dem jeweiligen Arm 12, 14 verlaufende und in den Figuren nicht dargestellte Verbindungsleitung gasleitend mit der Hauptschnüffelleitung verbunden.

Die Innenseiten 26 der beiden Arme 12, 14 sind im Bereich der vorderen Enden 22, 24 parallel zueinander angeordnet, sodass beim die Schnüffelsonde 10 derart in Bezug auf eine zu untersuchende Rohrleitung ausgerichtet werden kann, dass der zu prüfende Bereichder Rohrleitung in dem Testhohlraum 20 enthalten ist.

Von den Innenseiten 26 beider Arme 12, 14 stehen flexible Abschirmelemente in Form von elastischen Fasern oder Bürstenhaaren nach Art einer Bürste ab und ragen in den Testhohlraum 20 hinein. Die Abschirmelemente 30 sind parallel zueinander angeordnet.

Die Abschirmelemente sind ausschließlich in dem Randbereich 36 der Innenseiten 26 der beiden Arme 12, 14 angeordnet. Der Wandbereich 36 begrenzt die Innenseiten nach außen und umgibt die Ansaugöffnung 16, 18 vollständig. Dadurch bilden die in den Randbereichen 36 von den Innenseiten 26 abstehenden Abschirmelemente eine gasdurchlässige Wand, die den Testhohlraum 20 von der äußeren Umgebung 38 der Schnüffelsonde 10 abschirmt.

Jeder der beiden Arme 12, 14 ist mit einer oder mehreren Reihen 32 längerer Abschirmelemente 30 und/oder mit einer oder mehreren Reihen 34 kürzerer Abschirmelemente 30 versehen. Die Abschirmelemente der Reihen 34 sind kürzer ausgebildet als die Abschirmelemente 30 der Reihen 32. Die Reihen 32 und die Reihen 34 wechseln einander ab, so dass eine Reihe 34 zwischen zwei benachbarten Reihen 32 angeordnet ist und umgekehrt. Die längeren Abschirmelemente 30 der Reihen 32 erstrecken sich jeweils bis zur Mitte des Testhohlraums 20, so dass die Abschirmelemente 30 der Reihen 32 sich im Bereich der Mitte des Testhohlraums 20 nahezu berühren. Die kürzeren Abschirmelemente 30 der Reihen 34 hingegen sind jeweils nur ungefähr halb so lang wie die Abschirmelemente 30 der Reihen 32 ausgebildet, so dass zwischen einander gegenüberliegenden Abschirmelementen 30 der Reihen 34, die sich von einander gegenüberliegenden Armen 22, 24 den Testhohlraum 20 umgeben bzw. abschirmen, im Bereich der Mitte des Testhohlraums 20 ein Bereich für ein Testobjekt verbleibt. Dadurch verbiegt ein in den Testhohlraum 20 eingeführtes Testobjekt die längeren Abschirmelemente 30 der Reihen 32 stärker als die kürzeren Abschirmelemente 30 der Reihen 34.

Alternativ ist denkbar, dass die längeren und kürzeren Abschirmelemente 30 einander abwechseln, ohne dabei in Reihen gleicher Länge angeordnet zu sein. Dabei kann jeweils ein kürzeres Faserelement 30 von mehreren längeren Abschirmelementen umgeben sein und umgekehrt.

Die Abschirmelemente 30 schirmen die Ansaugöffnung 16 derart von der äußeren Umgebung der Schnüffelsonde 10 ab, dass die Auswirkungen von Luftverwirbelungen im Bereich außerhalb des Testhohlraums 20 auf die Luftströmung innerhalb des Testhohlraums 20 und in Richtung der Ansaugöffnung 16 bzw. 18 reduziert sind.

Bei einem weiteren, in den Figuren nicht dargestellten Ausführungsbeispiel ist nur ein als Schnüffelspitze ausgebildeter Arm vorgesehen, der mit einer Ansaugöffnung im Bereich der Schnüffelspitze versehen ist. Von der Schnüffelspitze stehen dabei im Bereich der Ansaugöffnung flexible langgestreckte Abschirmelemente ab. Bei den Abschirmelementen kann es sich um borstenartige langgestreckte Fasern und/oder um flexible Wände handeln. Für die Erfindung ist von Bedeutung, dass die Abschirmelemente den an die Ansaugöffnung angrenzenden Testhohlraum zu allen Seiten hin von der äußeren Umgebung der Schnüffelsonde abschirmen, sodass zwischen benachbarten Abschirmelementen ein Abstand von maximal 1/5 des Durchmessers der Ansaugöffnung und bevorzugt von weniger als 1/10 oder weniger als 1/100 des Durchmessers verbleibt. Die Abschirmelemente bilden Wände, die den Testhohlraum vollständig umschließen und/oder umgrenzen.

## Patentansprüche

1. Schnüffelsonde (10) zum Ansaugen von Gas in der Gaslecksuche, wobei die Schnüffelsonde mindestens eine Schnüffelspitze (11) aufweist, die mit einer Ansaugöffnung (16) versehen ist, die über eine Verbindungsleitung mit einer Hauptschnüffelleitung, die mit einem Gasleckdetektor verbindbar ist, verbunden ist, wobei die Schnüffelspitze (11) im Bereich der Ansaugöffnung (16) mit flexiblen langgestreckten Abschirmelementen (30) versehen ist, die von der Schnüffelspitze (11) derart abstehen, dass die Ansaugöffnung (16) von der äußeren Umgebung (38) der Schnüffelsonde (10) abgeschirmt wird, indem die Abschirmelemente (30) flexible, gasdurchlässige Wände eines an die Ansaugöffnung (16) angrenzenden Testhohlraums (20) für das zu untersuchende Testobjekt bilden, wobei die Schnüffelspitze und die davon abstehenden Abschirmelemente den Testhohlraum (20) im Wesentlichen vollständig umschließen und dadurch von der äußeren Umgebung (38) der Schnüffelsonde (10) abschirmen,
**dadurch gekennzeichnet,**
**dass** die Schnüffelsonde (10) mindestens zwei separate Arme (12, 14) aufweist, zwischen denen der Testhohlraum (20) gebildet ist, wobei mindestens einer der Arme (12, 14) auf der dem Testhohlraum (20) zugewandten Seite die Ansaugöffnung (16) aufweist.

2. Schnüffelsonde (10) nach dem vorhergehenden Anspruch, **dadurch gekennzeichnet, dass** der Abstand zwischen benachbarten Abschirmelementen geringer oder gleich etwa 1/10 oder bevorzugt 1/100 des Durchmessers der Ansaugöffnung ist.

3. Schnüffelsonde (10) nach einem der vorhergehenden Ansprüche, **dadurch gekennzeichnet, dass** die Schnüffelspitze (11) von mindestens einem Arm (12) gebildet wird, von dessen dem Testhohlraum (20) zugewandter Seite die Abschirmelemente (30) abstehen.

4. Schnüffelsonde (10) nach einem der vorhergehenden Ansprüche, **dadurch gekennzeichnet, dass** mehrere Abschirmelemente (30) die Ansaugöffnung (16) umgeben.

5. Schnüffelsonde (10) nach einem der Ansprüche 1 - 4, **dadurch gekennzeichnet, dass** mehrere Abschirmelemente (30) in Form von flexiblen und vorzugsweise elastischen Fasern, vorzugsweise in Form von Borsten nach Art eine Bürste vorgesehen sind.

6. Schnüffelsonde (10) nach einem der vorhergehenden Ansprüche, **dadurch gekennzeichnet, dass** die Abschirmelemente (30) ausschließlich in einem den Testhohlraum (20) von der äußeren Umgebung (38) abgrenzenden Randbereich (36) der dem Testhohlraum (20) zugewandten Seite (26) der Arme (12, 14) angeordnet sind.

7. Schnüffelsonde (10) nach einem der vorhergehenden Ansprüche, **dadurch gekennzeichnet, dass** die Abschirmelemente (30) an beiden Armen (12, 14) auf einander gegenüberliegenden Seiten des Testhohlraumes (20) angeordnet sind und sich jeweils in den Testhohlraum (20) umgeben bzw. von der Umgebung abschirmen.

8. Schnüffelsonde (10) nach dem vorhergehenden Anspruch, **dadurch gekennzeichnet, dass** sich zumindest einige der Abschirmelemente (30) ca. bis zur Mitte des Hohlraums (20) erstrecken.

9. Schnüffelsonde (10) nach einem der vorhergehenden Ansprüche, **dadurch gekennzeichnet, dass** Abschirmelemente (30) mindestens zwei verschiedener Längen vorgesehen sind, wobei vorzugsweise Abschirmelemente (30) gleicher Länge in Reihen (32, 34) angeordnet sind und die Reihen (32) mit langen Abschirmelementen (30) und die Reihen (34) mit kurzen Abschirmelementen (30) einander abwechseln.

10. Schnüffelsonde (10) nach einem der vorhergehenden Ansprüche, **dadurch gekennzeichnet, dass** zumindest einige der Abschirmelemente (30) den überwiegenden Teil des Hohlraums (20) umgeben.

11. Schnüffelsonde (10) nach einem der vorhergehenden Ansprüche, **dadurch gekennzeichnet, dass** die beiden Arme (12, 14) nach Art einer Gabel an ihren rückwärtigen Enden miteinander verbunden sind und an ihren den rückwärtigen Enden gegenüberliegenden vorderen Enden (22, 24) die Ansaugöffnungen (16, 18) aufweisen.

12. Schnüffelsonde (10) nach Anspruch 11, **dadurch gekennzeichnet, dass** die beiden Arme (12, 14) U-förmig ausgebildet sind.

13. Schnüffelsonde (10) nach einem der vorhergehenden Ansprüche, **dadurch gekennzeichnet, dass** die Ansaugöffnung (16, 18) an einer dem Testhohlraum (20) zugewandten Innenseite (26) des betreffenden Armes (12, 14) ausgebildet ist.

14. Schnüffelsonde (10) nach dem vorhergehenden Anspruch, **dadurch gekennzeichnet, dass** die Innenseiten (26) im Bereich der vorderen Enden (22, 24) der beiden Arme (12, 14) parallel zueinander ausgebildet sind.

15. Schnüffelsonde (10) nach einem der vorhergehenden Ansprüche, **dadurch gekennzeichnet, dass** die Arme (12, 14) an ihren rückwärtigen Enden mit einem die Hauptschnüffelleitung aufweisenden und mit einem Gasleckdetektor verbindbaren Stammelement (28) verbunden sind.

## Claims

1. A sniffer probe (10) for drawing in gas in gas leak detection, the sniffer probe having at least one sniffer tip (11) provided with an intake opening (16) which is connected via a connecting line to a main sniffer line which can be connected to a gas leak detector, the sniffer tip (11) being provided in the region of the intake opening (16) with flexible elongated shielding elements (30) which project from the sniffer tip (11) in such a way that the intake opening (16) is shielded from the outer environment (38) of the sniffer probe (10) by the shielding elements (30) forming flexible, gas-permeable walls of a test cavity (20) for the test object to be examined, which test cavity adjoins the intake opening (16), wherein the sniffer tip and the shielding elements projecting therefrom substantially fully enclose the test cavity (20) and thus shield the same from the outer environment (38) of the sniffer probe (10),
**characterized in that**
the sniffer probe (10) comprises at least two separate arms (12, 14) between which the test cavity (20) is formed, at least one of the arms (12, 14) having the intake opening (16) on the side facing the test cavity (20).

2. The sniffer probe (10) according to the preceding claim, **characterized in that** the distance between adjacent shielding elements is less than or equal to approximately 1/10 or preferably 1/100 of the intake opening diameter.

3. The sniffer probe (10) according to one of the preceding claims, **characterized in that** the sniffer tip (11) is formed by at least one arm (12) from the side of which that faces the test cavity (20) the shielding elements (30) project.

4. The sniffer probe (10) according to one of the preceding claims, **characterized in that** a plurality of shielding elements (30) surrounds the intake opening (16).

5. The sniffer probe (10) according to one of claims 1-4, **characterized in that** a plurality shielding elements (30) is provided in the form of flexible and preferably elastic fibers, preferably in the form of brush-type bristles.

6. The sniffer probe (10) according to one of the preceding claims, **characterized in that** the shielding elements (30) are arranged exclusively in an edge region (36) of the side (26) of the arms (12, 14) which faces the test chamber (20), said edge region delimiting the test chamber (20) from the outer environment (38).

7. The sniffer probe (10) according to one of the preceding claims, **characterized in that** the shielding elements (30) are arranged on both arms (12, 14) on opposite sides of the test cavity (20) and each border the test cavity (20) or shield the same from the environment.

8. The sniffer probe (10) according to the preceding claim, **characterized in that** at least some of the shielding elements (30) extend to approximately the center of the cavity (20).

9. The sniffer probe (10) according to one of the preceding claims, **characterized in that** shielding elements (30) of at least two different lengths are provided, shielding elements (30) of the same length preferably being arranged in rows (32, 34) and the rows (32) of long shielding elements (30) alternating with the rows (34) of short shielding elements (30).

10. The sniffer probe (10) according to one of the preceding claims, **characterized in that** at least some of the shielding elements (30) surround the greater part of the cavity (20).

11. The sniffer probe (10) according to one of the preceding claims, **characterized in that** the two arms (12, 14) are connected with each other at their rear ends in the manner of a fork and have the intake openings (16, 18) at their front ends (22, 24) opposite the rear ends.

12. The sniffer probe (10) according to claim 11, **characterized in that** the two arms (12, 14) are formed in U-shape.

13. The sniffer probe (10) according to one of the preceding claims, **characterized in that** the intake opening (16, 18) is formed on an inner side (26) of the respective arm (12, 14), which faces the test cavity (20).

14. The sniffer probe (10) according to the preceding claim, **characterized in that** the inner sides (26) are formed to be parallel to each other in the region of the front ends (22, 24) of the two arms (12, 14).

15. The sniffer probe (10) according to one of the preceding claims, **characterized in that** the arms (12, 14) are connected at their rear ends to a base element (28) which comprises the main sniffer line and can be connected to a gas leak detector.

## Revendications

1. Sonde de reniflage (10) permettant d'aspirer du gaz pour la recherche de fuite de gaz, dans laquelle la sonde de reniflage présente au moins une pointe de reniflage (11) munie d'un orifice d'aspiration (16) qui est relié par une conduite de raccordement à une conduite de reniflage principale pouvant être reliée à un détecteur de fuite de gaz, dans laquelle la pointe de reniflage (11) est munie, dans la région de l'orifice d'aspiration (16), d'éléments de blindage (30) allongés flexibles qui dépassent de la pointe de reniflage (11) de façon telle que l'orifice d'aspiration (16) est protégé de l'environnement extérieur (38) de la sonde de reniflage (10) en ce que les éléments de blindage (30) forment des parois flexibles perméables au gaz d'une cavité de test (20) adjacente à l'orifice d'aspiration (16) et destinée à l'objet de test à examiner, dans laquelle la pointe de reniflage et les éléments de blindage qui en dépassent entourent de manière essentiellement complète la cavité de test (20) et la protègent ainsi de l'environnement extérieur (38) de la sonde de reniflage (10),
**caractérisée en ce que**
la sonde de reniflage (10) présente au moins deux bras (12, 14) séparés entre lesquels est formée la cavité de test (20), au moins un des bras (12, 14) présentant l'orifice d'aspiration (16) sur le côté tourné vers la cavité de test (20).

2. Sonde de reniflage (10) selon la revendication précédente, **caractérisée en ce que** la distance entre des éléments de blindage voisins est inférieure ou égale à environ 1/10, ou de préférence 1/100, du diamètre de l'orifice d'aspiration.

3. Sonde de reniflage (10) selon l'une des revendications précédentes, **caractérisée en ce que** la pointe de reniflage (11) est formée par au moins un bras (12) présentant un côté, tourné vers la cavité de test (20), dont dépasse les éléments de blindage (30).

4. Sonde de reniflage (10) selon l'une des revendications précédentes, **caractérisée en ce que** plusieurs éléments de blindage (30) entourent l'orifice d'aspiration (16).

5. Sonde de reniflage (10) selon l'une des revendications 1 à 4, **caractérisée en ce que** plusieurs éléments de blindage (30) sont prévus sous la forme de fibres flexibles et de préférence élastiques, de préférence sous la forme de soies à la manière d'une brosse.

6. Sonde de reniflage (10) selon l'une des revendications précédentes, **caractérisée en ce que** les éléments de blindage (30) sont agencés exclusivement dans une région de bord (36) séparant la cavité de test (20) de l'environnement extérieur (38), au niveau du côté (26) des bras (12, 14) qui est tourné vers la cavité de test (20).

7. Sonde de reniflage (10) selon l'une quelconque des revendications précédentes, **caractérisée en ce que** les éléments de blindage (30) sont agencés au niveau des deux bras (12, 14), sur les côtés opposés de la cavité de test (20), et entourent respectivement la cavité de test (20) ou la protègent de l'environnement.

8. Sonde de reniflage (10) selon la revendication précédente, **caractérisée en ce qu'**au moins certains des éléments de blindage (30) s'étendent environ jusqu'au centre de la cavité (20).

9. Sonde de reniflage (10) selon l'une des revendications précédentes, **caractérisée en ce que** sont prévus des éléments de blindage (30) d'au moins deux longueurs différentes, des éléments de blindage (30) de même longueur étant de préférence agencés en rangées (32, 34), et les rangées (32) présentant de longs éléments de blindage (30) et les rangées (34) présentant de courts éléments de blindage (30) alternent les unes avec les autres.

10. Sonde de reniflage (10) selon l'une des revendications précédentes, **caractérisée en ce qu'**au moins certains des éléments de blindage (30) entourent la majeure partie de la cavité (20).

11. Sonde de reniflage (10) selon l'une des revendications précédentes, **caractérisée en ce que** les deux bras (12, 14) sont reliés l'un à l'autre au niveau de leurs extrémités arrière à la manière d'une fourche, et présentent les orifices d'aspiration (16, 18) au niveau de leurs extrémités avant (22, 24) opposées aux extrémités arrière.

12. Sonde de reniflage (10) selon la revendication 11, **caractérisée en ce que** les deux bras (12, 14) sont réalisés en forme de U.

13. Sonde de reniflage (10) selon l'une des revendications précédentes, **caractérisée en ce que** l'orifice d'aspiration (16, 18) est réalisé sur un côté intérieur (26), tourné vers la cavité de test (20), du bras (12, 14) concerné.

14. Sonde de reniflage (10) selon la revendication précédente, **caractérisée en ce que** les côtés intérieurs (26) sont réalisés parallèlement l'un à l'autre dans la région des extrémités avant (22, 24) des deux bras (12, 14).

15. Sonde de reniflage (10) selon l'une des revendications précédentes, **caractérisée en ce que** les bras (12, 14) sont reliés au niveau de leurs extrémités arrière à un élément de tige (28) qui présente la conduite de reniflage principale et peut être relié à un détecteur de fuite de gaz.
